# EUROPÄISCHE PATENTANMELDUNG

(11) **EP 1 944 687 A2**
(43) Veröffentlichungstag der Anmeldung: **16.07.2008**
(21) Anmeldenummer: 07117356.1
(22) Anmeldetag: 27.09.2007
(51) Int. Cl.: G06F 9/44

(54) **Verfahren zum Vernetzen von Endgeräten sowie Service-Plattform auf Java-Basis**

(30) Priorität: 29.09.2006 DE 102006046360
(71) Anmelder: Vodafone Holding GmbH, 40213 Düsseldorf (DE)
(72) Erfinder: Haiges, Sven, 85622, Feldkirchen (DE); Gutierrez, Oscar, 5002, Zaragoza (ES)
(74) Vertreter: Müller, Thomas

(57) **Zusammenfassung**

Die Erfindung betrifft ein Verfahren zum Vernetzen von Endgeräten mittels einer offenen, modularen Service-Plattform auf Java-Basis, wobei ein OSGi-Framework der Service-Plattform Schnittstellen bereitstellt, um Software-Komponenten von wenigstens einer Anwendung für die Endgeräte zu installieren, aktualisieren und/oder zu deinstallieren, wobei die Software-Komponenten Bundles (5, 6) zur Durchführung der Anwendung, die zur Kommunikation von Datenobjekten über Events (7) miteinander verlinkt sind, aufweisen, wobei eines der Bundles (5) (GUI-Bundle) eine graphische Schnittstelle zur Darstellung von Inhalten aufweist, bei dem das GUI-Bundle (5) und wenigstens ein weiteres Bundle (6) entkoppelt und über eine Event-Admin-Service-Einrichtung (8) indirekt miteinander verlinkt werden, so dass eine Kommunikation der Events (7) zwischen dem GUI-Bundle (5) und dem wenigstens einen weiteren Bundle (6) über die Event-Admin-Service-Einrichtung (8) erfolgt. Ferner betrifft die Erfindung eine Service-Plattform auf Java-Basis sowie ein Endgerät mit einer auf diesem implementierten Service-Plattform.

## Beschreibung

Die vorliegende Erfindung betrifft ein Verfahren zum Vernetzen von Endgeräten mittels einer offenen, modularen Service-Plattform auf Java-Basis, wobei ein OSGi-Framework der Service-Plattform Schnittstellen bereitstellt, um Software-Komponenten von wenigstens einer Anwendung für die Endgeräte zu installieren, aktualisieren und/oder zu deinstallieren, wobei die Software-Komponenten Informationen (Bundles) zur Durchführung der Anwendung, die zur Kommunikation von Datenobjekten (Events) miteinander verlinkt sind, aufweisen, wobei eines der Bundles (GUI-Bundle) eine graphische Schnittstelle zur Darstellung von Inhalten aufweist. Ferner betrifft die Erfindung eine Service-Plattform auf Java-Basis, mit einem OSGi-Framework zum Installieren, Aktualisieren und/oder zu Deinstallieren von Software-Komponenten von wenigstens einer Anwendung für ein Endgerät, wobei die Software-Komponenten Informationen (Bundles) zur Durchführung der Anwendung, die zur Kommunikation von Datenobjekten (Events) miteinander verlinkt sind, aufweisen, wobei eines der Bundles (GUI-Bundle) eine graphische Schnittstelle zur Darstellung von Inhalten aufweist, sowie ein Endgerät mit einer auf dem Endgerät implementierten Service-Plattform.

OSGi (OSGi = Open Services Gateway Initiative) bezeichnet die Standardisierung einer offenen Software-Plattform. D.h., OSGi spezifiziert eine javabasierte Software-Plattform, ein so genanntes Framework, die eine dynamische Integration von Softwarekomponenten ermöglicht und somit die Kommunikation zwischen diesen Softwarekomponenten steuert. Das Framework ist offen, modular und skalierbar. Das Framework stellt die grundlegenden Funktionen von OSGi zur Verfügung. Hierzu zählt der sichere Download von Services, die in Form von Bundles zusammengefasst sind. Das Framework organisiert den Installations- bzw. Deinstallationsvorgang, beachtet Abhängigkeiten zwischen den Services, sorgt für dynamisches Nachladen von noch fehlenden Softwaremodulen. Das Framework ermöglicht in seiner Funktion als Software-Basisplattform für eingebettete Geräte die Vernetzung von intelligenten Endgeräten durch nachträgliche Auslieferung und Installation von Diensten. Hierbei können Aufgaben, wie die Fernsteuerung, die Ferndiagnose und die Fernwartung dieser Geräte ebenfalls durchgeführt werden. Ferner wird die Verteilung von Informationen und multimedialen Unterhaltungsinhalten an diese Geräte über geeignete Protokolle ermöglicht. OSGi-Plattformen kommen typischerweise in Fahrzeugen, in mobilen Endgeräten, wie Mobiltelefonen, PDAs, Smartphones, etc., im Bereich der Heimvernetzung, beispielsweise durch Gateways oder Router, oder im Bereich der Gebäudeverwaltung zu Einsatz.

OSGi hat eine Vielzahl von Vorteilen. So ermöglicht OSGi das dynamische Laden von Funktionen. Ferner spezifiziert OSGi eine standardisierte Schnittstelle zum Software-Framework und zu Basisdiensten. OSGi reduziert des Weiteren aufgrund der Standardisierung Anhängigkeiten von Plattformlieferanten und Service-Providern.

Eine Softwarekomponente ist in der OSGi-Standardisierung mit dem Namen *Bundle* belegt. D.h., Bundles sind Softwarepakete, welche Bibliotheken, Ressource oder gemeinsam nutzbare, unabhängige Elemente einer Applikation, in OSGI *Service* genannt, enthalten können. Die Bundles dienen als Container für die jeweiligen Services. Ein Bundle beinhaltet alle Informationen, die zum Betrieb eines speziellen Service, einer speziellen Anwendung notwendig sind. Dazu zählen Java-Klassen für das OSGi-Management des jeweiligen Services, aber auch die eigentliche Service-Funktionalität selbst. Weiterhin können Ressourcen wie HTML-Daten, Bilder aber auch native Bibliotheken in einem Bundle zusammengefasst sein. Jedes Bundle kann einen oder mehrere Services enthalten, die im Rahmen der Installation vom Framework gestartet, aktualisiert und gestoppt werden können. Im Rahmen der Installation eines Services erzeugt das Framework für jeden Bundle ein eigenes Bundle-Objekt, das als Verwaltungsobjekt alle relevanten Daten innerhalb des Frameworks hält. Dabei legt die OSGi-Spezifikation die Interfaces dieses Bundle-Objekts als Java-Interfaces fest.

Services arbeiten in der OSGi Umgebung als Java-Objekte mit festgelegten Interfaces. Bei kundenspezifischen Services gibt der Standard keine genaue Struktur vor, wie diese Schnittstellen auszusehen haben. Neben den kundenspezifischen Realisierungen existieren allerdings innerhalb der OSGi Spezifikation eine Vielzahl verschiedener allgemein verwendbarer Services, der so genannten Basisdienste, die für interoperable Zusammenarbeiten eingesetzt werden können. In der OSGi Standardisierung sind eine Reihe von Basisdiensten spezifiziert, die zur Erleichterung für Applikationsentwickler dienen und auf spezielle Anforderungen bestimmter Märke eingehen sollen. So spezifiziert OSGi beispielsweise den Basisdienst "Communication-Service", welcher das Herstellen von Verbindungen oder das Verschicken von Nachrichten zu einem Kommunikationspartner über das Internet oder den SMS (SMS = Short Message Service) ermöglicht.

Beziehungen zwischen Bundles organisiert das Framework und sorgt so z.B. für das Aufräumen, wenn Services **deinstalliert** werden. Über spezielle Events benachrichtigt das Framework alle installierten Bundles, wenn ein neuer Service installiert oder ein bestehender Service deinstalliert worden ist. Durch die Möglichkeit des modularen Aufbaus des Frameworks, kann beispielsweise the Funktionalität einer Applikation in verschiedene Bundles aufgesplittet werden, welche unabhängig voneinander in dem Framework laufen. Bei sichtbaren Applikationen, d.h. Bundles mit einer graphischen Schnittstelle (GUI-Bundles), wird häufig der so genannte View von dem Rest der Applikation, d.h. dem Controller und dem Modell, getrennt. Hierbei sind der View und der Controller direkt miteinander verlinkt. Ein Modell bietet für die Darstellung des Views die Grundlage. Unter dem Modell versteht man das, was dauerhaft gespeichert und wiederhergestellt werden muss. Das Modell dient als Basis für alle Editierfunktionen und ist das Einzige, was über die Laufzeit der Anwendung dauerhaft bleibt. Ein View stellt das Modell graphisch dar. Der Controller steuert das Zusammenwirken des Modells mit seinen Views, auch als Ansichten bezeichnet. D.h., der Controller verbindet das Modell und den View. Der Controller verarbeitet die Benutzereingaben und organisiert die Anpassung des Modells und des Views. Der View erzeugt Ereignisse, die dem Controller zugesandt werden, der Änderungen an den Modelldaten vornehmen kann.

Nachteilig bei der direkten Verlinkung des Views und des Controllers ist, dass dies zu so genannten NuIIPointerExceptions führen kann. Der Begriff NullPointer bezeichnet eine Referenz auf die nicht existierende Speicherstelle 0, die von Programmierern dafür verwendet wird, zu zeigen, dass z.B. etwas noch nicht implementiert oder initialisiert wurde. D.h., wenn eine Applikation null ist, obwohl es nicht null sein darf, kommt es beim Aufruf der Applikation zur NullPointerException. Diese tritt aber erst beim Anwenden der Applikation auf. So kann es sein, dass ein View Teil eines ersten Bundles und der Controller Teil eines anderen Bundles ist. So kann es bei der Installation bzw. der Deinstallation der verschiedenen Bundles dazu kommen, dass die direkte notwendige Verlinkung zwischen dem View und dem Controller nicht gepflegt bzw. berücksichtigt wird. So kann es vorkommen, dass kein bzw. ein verbrauchter Verweis zwischen einem View und einem Controller in der Software bestehen bleibt.

Die Aufgabe der vorliegenden Erfindung ist es, die Nachteile der direkten Verlinkung eines Views und eines Controllers, insbesondere der NullPointerExceptions, bei OSGi-Plattformen zu vermeiden. Insbesondere soll das Vernetzen von Endgeräten mittels einer offenen, modularen Service-Plattform auf Java-Basis, wobei ein OSGi-Framework der Service-Plattform Schnittstellen bereitstellt, um Software-Komponenten von wenigstens einer Anwendung für die Endgeräte zu installieren, aktualisieren und/oder zu deinstallieren, vereinfacht werden.

Die vorliegende Aufgabe wird erfindungsgemäß durch ein Verfahren zum Vernetzen von Endgeräten mittels einer offenen, modularen Service-Plattform auf Java-Basis gemäß Patentanspruch 1, durch eine Service-Plattform auf Java-Basis gemäß Patentanspruch 6 sowie durch ein Endgerät mit einer auf diesem implementierten Service-Plattform gemäß Patentanspruch 11 gelöst. Weitere Ausgestaltungen der Erfindung ergeben sich aus den abhängigen Patentansprüchen, der zugehörigen Beschreibung sowie der Zeichnung. Merkmale und Details, die im Zusammenhang mit dem erfindungsgemäßen Verfahren zum Vernetzen von Endgeräten gemäß Patentanspruch 1 beschrieben sind, gelten dabei selbstverständlich, soweit anwendbar, auch im Zusammenhang mit der Service-Plattform auf Java-Basis gemäß Patentanspruch 6 sowie dem erfindungsgemäßen Endgerät mit einer auf diesem implementierten Service-Plattform gemäß Patentanspruch 11 und jeweils umgekehrt.

Gemäß des ersten Aspektes der Erfindung wird die Ausgabe durch ein Verfahren zum Vernetzen von Endgeräten mittels einer offenen, modularen Service-Plattform auf Java-Basis, wobei ein OSGi-Framework der Service-Plattform Schnittstellen bereitstellt, um Software-Komponenten von wenigstens einer Anwendung für die Endgeräte zu installieren, aktualisieren und/oder zu deinstallieren, wobei die Software-Komponenten Bundles zur Durchführung der Anwendung, die zur Kommunikation von Datenobjekten über Events miteinander verlinkt sind, aufweisen, wobei eines der Bundles (GUI-Bundle) eine graphische Schnittstelle zur Darstellung von Inhalten aufweist, gelöst, bei dem das GUI-Bundle und wenigstens ein weiteres Bundle entkoppelt und über eine Event-Admin-Service-Einrichtung indirekt miteinander verlinkt werden, so dass eine Kommunikation der Events zwischen dem GUI-Bundle und dem wenigstens einen weiteren Bundle über die Event-Admin-Service-Einrichtung erfolgt.

Eine Event-Admin-Service-Einrichtung ist ein standardisierter OSGI-Service, in Form eines Nachrichten-Versende-Moduls. Die Event-Admin-Service-Einrichtung entkoppelt den Sender eines Events vom Empfänger, insbesondere den View vom Controller. D.h. ein nicht mehr erreichbarer Empfänger kann nicht zu einem NullpointerException führen, da das Bindeglied, die Event-Admin-Service-Einrichtung, immer zur Verfügung steht. D.h. notfalls kann eine Nachricht (Event) nicht zugestellt werden, aber ein Nullpointer ist auf jeden Fall ausgeschlossen.
Durch die Entkopplung des GUI-Bundles und wenigstens eines weiteren Bundles tritt das Problem der NullPointerExceptions nicht mehr auf. Die Kommunikation zwischen dem GUI-Bundle und dem weiteren Bundle einer Anwendung/eines Services erfolgt nunmehr über die Event-Admin-Service-Einrichtung. Der Kern der Erfindung ist die spezielle Verwendung der Event-Admin-Service-Einrichtung, um Events/Nachrichten von dem GUI-Bundle zu einem weiteren Bundle einer Anwendung zu senden.

Endgeräte in Lichte der Erfindung können beispielsweise elektronische Geräte, wie Steuerungsgeräte, Gateways, Router, oder mobile elektronische Endgeräte, wie Mobiltelefone, PDAs, Smartphones oder tragbare Computer, sein. Eine Anwendung stellt im Lichte der Erfindung ein Service oder ein Dienst dar. Die Anwendungen/Services arbeiten in der OSGi Umgebung als Java-Objekte mit bestimmten Interfaces.

Die Event-Admin-Service-Einrichtung stellt ein Bindeglied zwischen dem GUI-Bundle und dem wenigstens einen weiteren Bundle dar. Die von dem GUI-Bundle versendeten Nachtrichten laufen nicht mehr in Leere, sondern zu der Event-Admin-Service-Einrichtung. Hierdurch werden keine NullPointerExceptions mehr angezeigt. Eine Nachricht/Event von dem GUI-Bundle kann von der Event-Admin-Service-Einrichtung nicht mehr einem anderen Bundle zugestellt werden, wenn dieses andere Bundle deinstalliert worden ist.

Durch ein derartiges Verfahren können Endgeräte leichter miteinander vernetzt werden. Der modulare Aufbau des Frameworks erlaubt das Installieren und Deinstallieren von Anwendungen weiterer Endgeräte auf einem ersten Endgerät. Die Installation, das Aktualisieren oder die Deinstallation von Anwendungen auf den Engeräten ist einfach durchzuführen. Das Ausführen der Anwendung führt nicht zu unerwünschten NullPointerExceptions, auch wenn bestimmte Anwendungen und Bundles bereist deinstalliert sind.

Bevorzugt ist ein Verfahren, bei dem das GUI-Bundle die Viewer-Funktionalität und ein weiteres Bundle die Controller-Funktionalität der Anwendung darstellen, und dass die Viewer-Funktionalität und die Controller-Funktionalität entkoppelt und über eine Event-Admin-Service-Einrichtung indirekt miteinander verlinkt werden, so dass eine Kommunikation der Events zwischen der Viewer-Funktionalität und der Controller-Funktionalität über die Event-Admin-Service-Einrichtung erfolgt. D.h., durch die Trennung der direkten Verlinkung eines Views von einem Controller einer Anwendung, ist es möglich den Controller zu deinstallieren, ohne dass der View mit deinstalliert wird. Dies ist dann von Bedeutung, wenn der View mit verschiedenen anderen Bundles, d.h. anderen Controllern, verbunden ist.

Vorteilhaft ist daher ein Verfahren, bei dem die von dem GUI-Bundle über die Event-Admin-Service-Einrichtung zu einem weiteren Bundle kommunizierten Events/Nachrichten wenigstens einer dritten Anwendung zur Verarbeitung zur Verfügung gestellt werden. Dies ist insbesondere dann vorteilhaft, wenn das GUI-Bundle von mehreren Anwendungen/Services genutzt wird. Das GUI-Bundle dient dann als zentrale Instanz und kontrolliert beispielsweise das Monitoring, das Filtern oder das Loggen in den Anwendungen. Dies macht insbesondere dann Sinn, wenn unterschiedliche Anwendungen, d.h. verschiedene Controller, mit ein und demselben GUI-Bundle verbunden sind und die graphische Darstellung der unterschiedlichen Anwendungen zumindest teilweise einheitlich gestaltet werden soll. D.h., bevorzugt ist ein Verfahren, bei dem das GUI-Bundle zumindest Bestandteile von Informationen unterschiedlicher Anwendungen, unterschiedlicher Controller, in einem über die Service-Plattform vernetzten Endgerät einheitlich darstellt.

Ferner ist ein Verfahren vorteilhaft, bei dem jede Anwendung zumindest eine auf das GUI-Bundle bezogene einheitliche Schnittstelle aufweist, über die jede Anwendung dem GUI-Bundle Informationen überträgt, die in dem Endgerät einheitlich dargestellt werden. Hierdurch ist gewährleistet, dass die graphische Darstellung verschiedener Anwendungen/Services zumindest teilweise einheitlich dargestellt werden können. Durch die auf das GUI-Bundle bezogene einheitliche Schnittstelle wird es einer neu installierten Anwendung ermöglicht, das GUI-Bundle mit entsprechenden Informationen zu versorgen, die zur Darstellung der neu installierten Anwendung über das GUI-Bundle notwendig sind.

Gemäß eines zweiten Aspektes der Erfindung wird die Aufgabe ferner durch eine Service-Plattform auf Java-Basis, mit einem OSGi-Framework zum Installieren, Aktualisieren und/oder zum Deinstallieren von Software-Komponenten von wenigstens einer Anwendung für ein Endgerät, wobei die Software-Komponenten Informationen (Bundles) zur Durchführung der Anwendung, die zur Kommunikation von Datenobjekten über Events miteinander verlinkt sind, aufweisen, wobei eines der Bundles (GUI-Bundle) eine graphische Schnittstelle zur Darstellung von Inhalten aufweist, gelöst, wobei das GUI-Bundle und das wenigstens eine weitere Bundle entkoppelt und über eine Event-Admin-Service-Einrichtung der Service-Plattform indirekt miteinander verlinkt sind.

Die Service-Plattform ist ausgebildet zur Durchführung des zuvor beschriebenen Verfahrens gemäß des ersten Aspektes der Erfindung. Eine derartige Service-Plattform auf Java-Basis vermeidet das Auftreten von NullPointerExceptions, da der Sender eines Events/einer Nachricht von dem Empfänger entkoppelt ist. Wird beispielsweise der Empfänger von der Service-Plattform entfernt, so kommt es nicht zu einer NullpointerException, da das Bindeglied, die Event-Admin-Service-Einrichtung, weiter zur Verfügung steht und die Nachricht an den ursprünglich vorhandenen Empfänger von der Event-Admin-Service-Einrichtung lediglich nicht zugestellt werden kann. Da Auftreten der NullpointerException wird aber verhindert. Durch die Verwendung der Event-Admin-Service-Einrichtung als Bindeglied zwischen einem Sender und einer Empfänger einer Anwendung/eines Services, d.h. des GUI-Bundles von einem weiteren mit dem GUI-Bundle verbunden Bundle, erfolgt keine Fehlermeldung im Programm, falls das wenigstens eine weitere Bundle deinstalliert wurde. Somit können weitere Bundles bzw. Anwendungen, die ebenfalls über die Event-Admin-Service-Einrichtung mit dem GUI-Bundle verbunden sind noch ausgeführt werden. Die von dem GUI-Bundle versendeten Nachtrichten laufen nicht mehr in Leere, sondern zu der Event-Admin-Service-Einrichtung. Eine Nachricht/Event von dem GUI-Bundle wird von der Event-Admin-Service-Einrichtung nicht mehr einem anderen Bundle zugestellt, wenn dieses andere Bundle deinstalliert worden ist.

Besonders vorteilhaft ist eine Service-Plattform, bei der die Event-Admin-Service-Einrichtung wenigstens eine Schnittstelle zu einer dritten Anwendung aufweist, über die die von dem GUI-Bundle über die Event-Admin-Service-Einrichtung zu einem weiteren Bundle kommunizierten Events wenigstens einer dritten Anwendung zur Verarbeitung zur Verfügung gestellt werden oder werden können. So kann eine zu einem deinstallierten Bundle gesendeter Event/gesendete Nachricht einer anderen Anwendung bzw. an ein Bundle einer anderen Anwendung gesendet werden, welche(s) den Event entsprechend verarbeiten kann. Dadurch, dass mehrere Anwendungen bzw. Bundles über die Event-Admin-Service-Einrichtung mit dem GUI-Bundle verbunden/verlinkt sind, kann es auch bei der Deinstallation einer Anwendung nicht zu dazu führen, dass die von dem GUI-Bundle ausgesendeten Nachrichten komplett ins Leere laufen und somit nicht mehr verarbeitet werden können.

Bevorzugt ist daher eine Service-Plattform, bei der das GUI-Bundle zur einheitlichen Darstellung von zumindest Bestandteilen von Informationen unterschiedlicher Anwendungen in einem über die Service-Plattform vernetzten Endgerät ausgebildet ist. Hierdurch können unterschiedliche Anwendungen über das GUI-Bundle graphisch auf dem Endgerät, insbesondere einer Anzeigeinrichtung des Endgerätes, dargestellt werden. Hierzu weist jede Anwendung vorteilhafterweise zumindest eine auf das GUI-Bundle bezogene einheitliche Schnittstelle auf, über die jede Anwendung dem GUI-Bundle Informationen übertragen kann, die in dem Endgerät einheitlich darstellbar sind.

Eine Service-Plattform, die dadurch gekennzeichnet, dass sie eine Schnittstelle zu einem externen Wartungsrechner für die Service-Plattform aufweist, ermöglicht die Wartung, aber auch das Installieren oder Deinstallieren von Anwendungen auf der Service-Plattform.

Gemäß des dritten Aspektes der Erfindung wird die Aufgabe durch ein Endgerät mit einer auf diesem implementierten Service-Plattform gelöst, wobei die Service-Plattform wie zuvor beschrieben ausgebildet ist. Ein Endgerät mit einer Service-Plattform auf Java-Basis, mit einem OSGi-Framework zum Installieren, Aktualisieren und/oder zum Deinstallieren von Software-Komponenten von wenigstens einer Anwendung für ein Endgerät, wobei die Software-Komponenten Informationen (Bundles) zur Durchführung der Anwendung, die zur Kommunikation von Datenobjekten (Events) miteinander verlinkt sind, aufweisen, wobei eines der Bundles (GUI-Bundle) eine graphische Schnittstelle zur Darstellung von Inhalten aufweist, gelöst, wobei das GUI-Bundle und das wenigstens eine weitere Bundle entkoppelt und über eine Event-Admin-Service-Einrichtung der Service-Plattform indirekt miteinander verlinkt sind, ermöglicht einen reibungslosen Auflauf von Anwendungen auf dem Endgerät, da die Event-Admin-Service-Einrichtung das Auftreten von unerwünschten NullPointerExceptions vermeidet.

Das Endgerät weist bevorzugt eine zuvor beschriebene Service-Plattform gemäß des zweiten Aspektes der Erfindung auf, die zur Durchführung des zuvor beschriebenen Verfahrens gemäß des ersten Aspektes der Erfindung ausgebildet ist.

Die Erfindung wird nachfolgend anhand eines Ausführungsbeispiels unter Bezugnahme auf die beiliegende Zeichnung näher erläutert. Es zeigt:

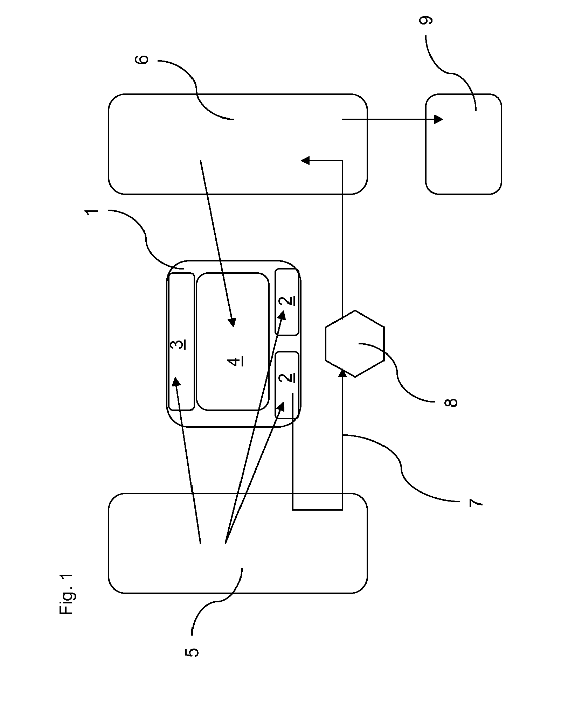

- Fig. 1: eine schematische Darstellung der Verbindung eines GUI-Bundles zu einem weiteren Bundle.

Fig. 1 zeigt eine Anzeige 1 eines Endgerätes, insbesondere eines Mobiltelefons, mit verschiedenen Anzeigefeldern 2, 3, 4. Das GUI-Bundle 5 ist mit dem weiteren Bundle 6 verbunden. Ferner sind ist sowohl das GUI-Bundle 5 als auch das weitere Bundle 6 mit der Anzeige 1 des Endgerätes über entsprechende Schnittstellen verbunden. Das GUI-Bundle 5 ist für eine einheitliche Darstellung auf der Anzeige 1 verantwortlich. D.h., das GUI-Bundle 5 gibt über die Anzeigefelder 2, 3 einheitlich den jeweiligen Namen der Anwendung 3 des weiteren Bundles 6 sowie Menüfelder 2 vor. Die Anzeigefeldern 2, 3 können beispielsweise als Softbuttons ausgebildet sein. Durch die Anwahl eines Anzeigefeldes, insbesondere durch das Drücken eines als Softbutton ausgebildeten Anzeigefeldes, wird ein Event 7 von dem GUI-Bundle an das weitere Bundle 6 gesendet. Damit dieser Event 7 nicht ins Leere läuft, falls das weiter Bundle 6 zum Beispiel bereits von dem Framework deinstalliert worden ist, ist die Event-Admin-Service-Einrichtung 8 als Bindeglied zwischen dem GUI-Bundle 5 ist dem weiteren Bundle 6 zwischengeschaltet. D.h., die Event-Admin-Service-Einrichtung 8 entkoppelt das GUI-Bundle 5 von dem weiteren Bundle 6. Eine unerwünschte NullPointerException erfolgt nicht, wenn das Event 7 des GUI-Bundles 5 nicht das weitere Bundle 6 erreicht, da die Event-Admin-Service-Einrichtung 8 das Event 7 nicht an ein nicht mehr vorhandenes weiteres Bundle 6 weiterleitet. Somit kommt es nicht zu einem Fehler beim Ausführen einer ausgewählten Anwendung. Vorteilhafterweise haben die weiteren Bundles 6 weiterer Anwendungen Schnittstellen zu dem GUI-Bundle 5, so dass über diese Schnittstellen Informationen für die einheitliche Anzeige der Anwendungen über das GUI-Bundle gesendet werden können. Das weitere Bundle 6 weist ferner eine Schnittstelle zu dem Anzeigefeld 4 der Anzeige 1 des Endgerätes auf, um dort anwendungsspezifische Informationen anzuzeigen. Ferner kann ein Service- bzw. Wartungsbundle 9 vorgesehen sein, durch welches ein weiteres Bundle 6 einer Anwendung gewartet werden kann.

## Patentansprüche

1. Verfahren zum Vernetzen von Endgeräten mittels einer offenen, modularen Service-Plattform auf Java-Basis, wobei ein OSGi-Framework der Service-Plattform Schnittstellen bereitstellt, um Software-Komponenten von wenigstens einer Anwendung für die Endgeräte zu installieren, aktualisieren und/oder zu deinstallieren, wobei die Software-Komponenten Bundles (5, 6) zur Durchführung der Anwendung, die zur Kommunikation von Datenobjekten über Events (7) miteinander verlinkt sind, aufweisen, wobei eines der Bundles (5) (GUI-Bundle) eine graphische Schnittstelle zur Darstellung von Inhalten aufweist, **dadurch gekennzeichnet, dass** das GUI-Bundle (5) und wenigstens ein weiteres Bundle (6) entkoppelt und über eine Event-Admin-Service-Einrichtung (8) indirekt miteinander verlinkt werden, so dass eine Kommunikation der Events (7) zwischen dem GUI-Bundle (5) und dem wenigstens einen weiteren Bundle (6) über die Event-Admin-Service-Einrichtung (8) erfolgt.

2. Verfahren nach Anspruch 1, **dadurch gekennzeichnet, dass** das GUI-Bundle (5) die Viewer-Funktionalität und ein weiteres Bundle (6) die Controller-Funktionalität der Anwendung darstellen, und dass die Viewer-Funktionalität und die Controller-Funktionalität entkoppelt und über eine Event-Admin-Service-Einrichtung (8) indirekt miteinander verlinkt werden, so dass eine Kommunikation der Events (7) zwischen der Viewer-Funktionalität und der Controller-Funktionalität über die Event-Admin-Service-Einrichtung (8) erfolgt.

3. Verfahren nach Anspruch 1 oder 2, **dadurch gekennzeichnet, dass** die von dem GUI-Bundle (5) über die Event-Admin-Service-Einrichtung (8) zu einem weiteren Bundle (6) kommunizierten Events (7) wenigstens einer dritten Anwendung zur Verarbeitung zur Verfügung gestellt werden.

4. Verfahren nach einem der Ansprüche 1 bis 3, **dadurch gekennzeichnet, dass** das GUI-Bundle (5) zumindest Bestandteile von Informationen unterschiedlicher Anwendungen in einem über die Service-Plattform vernetzten Endgerät einheitlich darstellt.

5. Verfahren nach Anspruch 4, **dadurch gekennzeichnet, dass** jede Anwendung zumindest eine auf das GUI-Bundle (5) bezogene einheitliche Schnittstelle aufweist, über die jede Anwendung dem GUI-Bundle (5) Informationen überträgt, die in dem Endgerät einheitlich dargestellt werden.

6. Service-Plattform auf Java-Basis, mit einem OSGi-Framework zum Installieren, Aktualisieren und/oder zum Deinstallieren von Software-Komponenten von wenigstens einer Anwendung für ein Endgerät, wobei die Software-Komponenten Bundles (5, 6) zur Durchführung der Anwendung, die zur Kommunikation von Datenobjekten über Events (7) miteinander verlinkt sind, aufweisen, wobei eines der Bundles (5) (GUI-Bundle) eine graphische Schnittstelle zur Darstellung von Inhalten aufweist, **dadurch gekennzeichnet, dass** das GUI-Bundle (5) und das wenigstens eine weitere Bundle (6) entkoppelt und über eine Event-Admin-Service-Einrichtung (8) der Service-Plattform indirekt miteinander verlinkt sind.

7. Service-Plattform nach Anspruch 6, **dadurch gekennzeichnet, dass** die Event-Admin-Service-Einrichtung (8) wenigstens eine Schnittstelle zu einer dritten Anwendung aufweist, über die die von dem GUI-Bundle (5) über die Event-Admin-Service-Einrichtung (8) zu einem weiteren Bundle (6) kommunizierten Events (7) wenigstens einer dritten Anwendung zur Verarbeitung zur Verfügung gestellt werden oder werden können.

8. Service-Plattform nach Anspruch 6 oder 7, **dadurch gekennzeichnet, dass** das GUI-Bundle (5) zur einheitlichen Darstellung von zumindest Bestandteilen von Informationen unterschiedlicher Anwendungen in einem über die Service-Plattform vernetzten Endgerät ausgebildet ist.

9. Service-Plattform nach Anspruch 8, **dadurch gekennzeichnet, dass** jede Anwendung zumindest eine auf das GUI-Bundle (5) bezogene einheitliche Schnittstelle aufweist, über die jede Anwendung dem GUI-Bundle (5) Informationen übertragen kann, die in dem Endgerät einheitlich darstellbar sind.

10. Service-Plattform nach einem der Ansprüche 6 bis 9, **dadurch gekennzeichnet, dass** diese eine Schnittstelle zu einem externen Wartungsrechner für die Service-Plattform aufweist.

11. Endgerät mit einer auf diesem implementierten Service-Plattform, **dadurch gekennzeichnet, dass** die Service-Plattform nach einem der Ansprüche 6 bis 9 ausgebildet ist.
